Europäisches Patentamt

European Patent Office

Office européen des brevets

(11) Publication number: **0 046 881**

**B1**

## (12) EUROPEAN PATENT SPECIFICATION

(45) Date of publication of patent specification: **13.11.85**

(51) Int. Cl.⁴: **B 60 R 22/00**, B 60 R 22/18

(21) Application number: **81105909.6**

(22) Date of filing: **27.07.81**

(54) Method of securing a webbing to a vehicle.

| | |
|---|---|
| (30) Priority: **30.08.80 DE 3032719** | (73) Proprietor: **Klippan G.m.b.H Sicherheitsgeräte Kohfurth 15 Postfach 1280 D-2000 Hamburg 3/Norderstedt (DE)** |
| (43) Date of publication of application: **10.03.82 Bulletin 82/10** | (72) Inventor: **Muskat, Kurt Ulrich Borner Stieg 11 D-2000 Hamburg 62 (DE)** |
| (45) Publication of the grant of the patent: **13.11.85 Bulletin 85/46** | |
| (84) Designated Contracting States: **FR GB IT SE** | (74) Representative: **Seiffert, Klaus et al Gustav Freytag-Strasse 25 Postfach 6145 D-6200 Wiesbaden 1 (DE)** |
| (56) References cited: **EP-A-0 036 507 DE-A-2 244 419 DE-A-2 823 018 DE-U-8 023 142** | |

Courier Press, Leamington Spa, England.

## Description

The invention relates to a method for attaching a strap to a vehicle, in particular for safety belt systems in motor vehicles, where the strap end is laid in a loop and fastened on itself, preferably sewn, at a distance from the loop, and where anchoring means with a screw screwable into a connection fitting or a connection nut are provided for attachment of the strap loop to the vehicle.

In all presently customary safety belt systems in motor vehicles, the strap end is laid over in the above described manner forming a loop and is sewn on itself. The attachment of the strap end on the strap behind the loop, however, does not succeed by sewing only. The invention explained below is suitable for all attachment types, whether by sewing, gluing, clamping or using toothed clamping plates.

In the known safety belt systems, the strap end must be fastened to the vehicle at one, two or three points, and this is done by attachment fittings. These are metal plates which are made either straight or bent at an angle. For safety reasons these known fitting parts are surface-treated, to offer corrosion protection. This is necessary in particular when the attachment or anchoring point of the strap end is located on the floor of the vehicle where snow, dirt and moisture can cause corrosion. To eliminate safety risks, therefore, the fitting parts are specially treated, resulting in additional costs.

The fitting parts belong to the initially mentioned anchoring means and are fastened by a screw at the connection fitting or by a connection nut in the vehicle. The fitting part, therefore, has as a rule a hole for the passage of this screw and a second hole, preferably formed as an oblong slot, for insertion of the strap end. At the moment of accident, therefore, practically the load is transmitted via the strap, the fitting part and the screw to the connection nut and hence to the vehicle. The supplier of the strap system must pass the strap through the hole in the fitting part, so that a threading job before the attachment of the strap end on itself behind the loop is inevitable.

DE—A—2 244 419 discloses an anchoring cable 6, 7 to connect a buckle of a safety seat belt system to a connection fitting, for example the tunnel 9 of the floor of a vehicle. The wire strand cable 6, 7 is formed to a loop, necessarily at the ends thereof, so that the metal wire cable runs around the loops. Ear fittings 1 are inserted in the loops to have a suitable guiding for the cable. This ear or eye shaped ring 1 with the cable wrapped around is screwed to the tunnel 9 by means of a screw 8. Rotational movement of the cable 6, 7 around the axis of the screw 8 is not intended and not necessary.

Also DE—A—2 823 018 discloses a metal wire cable to anchor a buckle 2 to the floor 23 of a vehicle by means of a screw 21. The metal wire cable is wrapped around the screw thereby forming a loop. This loop or double-loop, if both ends are put one above the other, is inserted in a deformable metal ring 24, 25 which are squeezed together with the metal cable inside thereby providing a fixed connection between the screw and the cable. Rotating movement and in addition bending of the cable into different directions with respect to the axis of the screw are not intended.

A disadvantage in the known type of attachment of straps on vehicles is the use of fitting parts which must be kept in stock in a variety of forms. Besides, apart from the material cost for the manufacture of the fitting parts, the above mentioned surface treatment is necessary.

It would be desirable to provide a means to attach a strap to a vehicle in a simpler way, saving costs and weight.

In accordance with this invention, there is provided a method of attaching an end of a strap of a safety belt to a vehicle using a loop formed by said end fastened on itself at a distance from the loop and a screw having a head thereon and screwable into a connection fitting, the method comprising the steps of folding the loop of the strap at least once around an imaginary line extending in the longitudinal direction of said strap forming a noose, then inserting the screw in the hole formed by this noose after, optionally, a washer has first been placed under the head of the screw and then screwing the screw into the connection fitting.

The unexpectedly simple proposal according to the invention aims at doing away with the fitting parts completely. To this end the loop, present at the strap end anyway, must merely be folded once more around the line extending in lengthwise direction of the strap, whereby a noose of smaller width than the width of the strap is formed to advantage, without requiring additional operations. It is preferred to fold the loop of the strap around the mentioned imaginary longitudinal line once, twice or at most three times, to obtain a strap noose still easy to handle, through which the screw with metal washer applying against the head thereof is passed. A strap end thus adapted, i.e. partially assembled already, can be offered by the strap manufacturer to the user or to the automotive industry. On the side of the strap noose opposite the screw head, a pasteboard disk may be fitted, as is customary already now in strap systems supplied partly assembled, for shipping purposes.

It is, according to the invention, advantageous to make the strap noose so short that even at maximum overhead load of the strap it does not slip over the washer and screw head. Important, therefore, is the length of the strap noose or in other words the distance between the point at which the attachment of the strap end on itself starts and the inner edge of the strap noose diametrically opposite this point. This length or this diameter of the strap noose must not slip over the washer (or head of the screw) even in case of maximum load at the moment of accident due to an upwardly extending load, i.e. in the direction of the axis of the screw. While loading in the overhead direction is the most unfavorable case, which as a rule will not occur even at moment of accident, for safety reasons the dimensioning of the strap noose is also calculated for this worst case.

In a further development of the invention, the screw comprises at its head a thread-free portion, or a bushing applies against the head partially covering the thread. Both measures serve the same purpose. In the first embodiment the screw has a thread cut for example only over two-thirds of its length from its end toward the head, while the shank portion next to the head is unthreaded. In the other embodiment the thread of the screw extends up to its head, and for covering about one-third of the thread in the region next to the head a bushing is slipped on in such a way that it covers the thread in said third of the screw length. The purpose of the thread-free portion or respectively of the bushing is, on the one hand, the protection of the strap, which in the form of the noose places itself around this protruding portion of the screw and is strongly pressed against this surface at the moment of accident. While the thread-free portion is not absolutely necessary, the many ridges of the thread could more easily cause rupture of the strap at strong application of the strap noose against the thread of the screw. This is prevented by the above measures.

Another advantage of the thread-free portion or of the bushing is, on the other hand, that in mounting, e.g. with the use of machine stud drivers, squashing of the strap is automatically eliminated to advantage. When the installer takes in hand the strap and assembled in the above described manner or in the absence of assembly passes the screw through the washer and bushing, he can, even when using a machine stud driver and without attention, tighten the screw with the available torque without having to fear a squashing of the strap. Then, in fact, the screw runs up practically only to the shoulder provided by the bushing or by the thread-free portion and cannot be screwed in further. The screw then remains protruding from the connection nut or from the connection fitting by this distance.

This protruding portion of the screw has a certain height, namely the height of the screw head up to the surface of the said connection nut, by which a momentum is given. The length of the thread-free part or of the bushing, i.e. the height by which the screw protrudes from the attachment point of the vehicle, in particular the connection nut, must be dimensioned so that the screw does not break off even at maximum load at the moment of accident.

This is provided for generally and customarily already by the overdimensioned notch impact toughness of the screw material. Even at relatively low and relatively high temperatures the notch impact toughness is sufficient to ensure the necessary strength of the safety belt system in areas of low as well as high temperature.

The advantage of the measures according to the invention is, however, the elimination of all fitting elements of metal, the notch impact toughness of which would likewise have to be high and which would also have to be surface treated in the above described manner to offer resistance not only to corrosion but also to brittle failure at cold temperatures. Thus, by the measures of the invention not only does one save the fitting elements and hence the material itself, but also safety is increased. In addition, a very desirable advantage in the automotive industry, namely a saving of weight, results. The automotive industry also welcomes the simplified mounting and the reduction of the mounting costs by reduction of the diversity of types since different kinds of metal fittings are now no longer necessary.

It is further expedient according to the invention to arrange next to the metal washer a plastic disk preferably partly embracing the latter. Thereby not only does it become less likely that the strap noose will slip over the screw head with washer, but also abrasion and generally damage to the strap at the point of its loop are reduced.

This measure with the plastic disk is particularly appropriate for preassembly, in particular when according to the invention the plastic disk and the bushing are made in one piece. Then a bushing thus made can be pressed into the strap noose folded in the strap manufacturer's plant and be supplied in this preassembled manner to the ultimate consumer or to the automotive industry. It is here especially advantageous further to form a bead molded on at the end of the bushing opposite the plastic disk. This will prevent the bushing from slipping out of the strap noose during the partial preassembly.

A prerequisite for a good attachment in the sense of the invention is, of course, the actually already known attachment of the strap end on itself in the case of loop formation, a great variety of seams being used at present, namely lock seams, cross seams, lengthwise seams, etc. In the instance of the invention, in an accident a spreading of the strap noose will mean the greatest danger for these seams or respectively for the attachment of the strap end on itself. Therefore the stitches should be placed on the one hand not too close to the screw, because otherwise the angle from the start of the seam becomes too great and hence also the radial load as the strap noose spreads at the moment of accident becomes too great. But for the above mentioned reasons the seam or respectively other attachment parts, e.g. toothed clamping plates, etc, should be placed not too far way from the noose, so that a slipping over the washer is avoided. In other words, the particular configuration should be chosen from the appropriate mean values found in tests and in the practice to optimize the attachment, namely so that maximum resistance is offered to the radial load during spreading of the strap noose.

Other advantages, features and possible applications of the present invention will become evident from the following description of preferred embodiments with reference to the drawings. Of these:

Fig. 1 shows a broken-off side view of the attachment screw with the strap end to be attached to the vehicle;

Fig. 2, shows, schematically and broken off, the top view of the representation of Fig. 1;

Fig. 3, shows another form of realization of the screw with bushing and a plastic disk partially embracing the metal washer; and

Fig. 4, shows still another form of realization of the attachment screw with metal washer and plastic bushing.

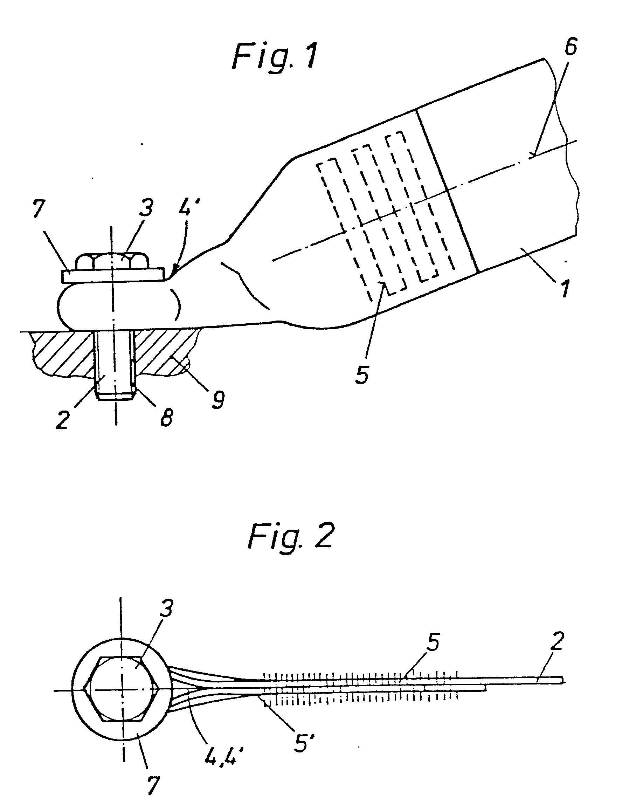

For connecting the safety belt to the vehicle, the strap 1 is connected according to Fig. 1 and 2 directly to the screw 2 with head 3, without coupling or attachment fitting.

Just as in the known strap attachments, in the form of realization shown in Fig. 1 and 2 the strap 1 is laid in a loop 4 at its end and fastened by seams 5 on itself at a distance from the loop 4, which may selectively be shorter than illustrated in Fig. 1 and 2. In the illustration of Fig. 1 and 2 it is seen that what is here involved is a so-called cross seam, in which the stitches, which are illustrated in Fig. 2 by several parallel lines, extend crosswise to the strap. The first stitch 5' of seam 5 at the end toward the screw 2 should be placed at a certain, initially explained distance from screw 2 or respectively from noose 4'.

This noose 4' corresponds in the top view of Fig. 2 to the loop 4, but has according to the representation of Fig. 1 a much smaller width or respectively height. Assuming that the width of the strap is about 46 to 50 mm, the single loop 4 would likewise have such a width or height of 46 to 50 mm. The attachment according to the invention, however, requires first the formation of the noose 4' of strap 1. To this end the loop 4 of strap 1 is folded over about an imaginary line 6 placed in longitudinal direction of the strap one to three times, preferably twice, forming said noose 4'. Then the screw 2 is inserted in the hole formed by this noose 4', after the metal washer 7 has first been placed under the head 3 of screw 2. Then the screw is screwed by its thread 8 into a connection fitting 9 shown broken off and schematically in Fig. 1.

In the form of realization with the above stated dimensions, the noose 4' has a height from the surface of the connection fitting 9 to the underside of the washer 7 of about 12.5 mm. In this example, the outside diameter of the metal washer having a thickness of about 2 to 3 mm is about 25 to 30 mm. The diameter of the shank of the screw is about 12 mm and that of the head is about 18 mm. The distance between the center line of the screw and the first row of stitching on the noose is on the order of about 30 to 40 mm. It is seen that even at an overhead load of the strap attachment, i.e. at load in strap 1 in the direction of the axis of screw 2, e.g. in the position of Fig. 1 upwardly normal to the surface of the connection fitting 9, the noose 4' cannot slip over the head 3 or respectively the washer 7. Devices of the above type have exhibited pull strengths above the required amounts, such as on the order of 1675 decaNewtons whereas the European standard is 1470 decaNewtons.

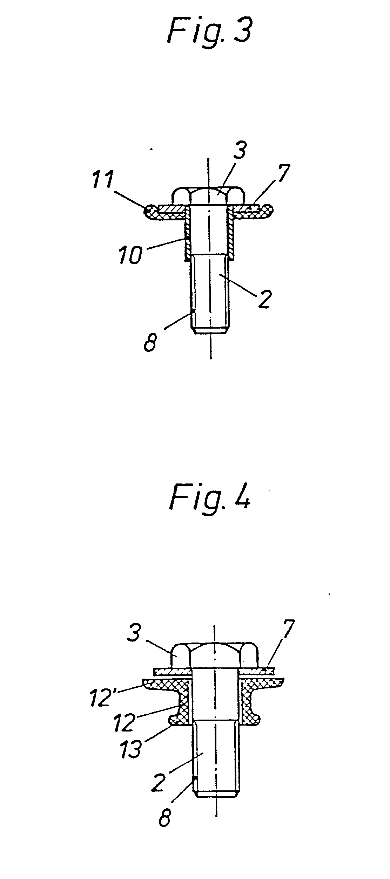

Fig. 3 shows the sectional view of screw 2 without strap. The thread 8 of screw 2 here extends only over about two-thirds the length of screw 2, so that a thread-free portion results at the top of head 3 of the screw. Instead of this, or in addition, as shown in Fig. 3, a metal bushing 10 can be slipped over screw 2 to abutment at head 3. Thus the bushing 10 forms an aubtment point of strap 1 at the bolt of screw 2. To be able to transmit especially high axial loads, according to Fig. 3 a small rounded plastic disk 11 is cuffed over the metal washer 7.

The described attachment device can be used especially where the strap attachment is effected in a concealed manner. This applies in particular to the provision of back seat straps in a motor vehicle, where the attachment points are located as a rule either laterally to the seat cushion or respectively in the dent between seat cushion and seat back. But also when the lower lap belt point is disposed at the lower outer front seat position, an attachment pleasing to the eye can be obtained when using a disk which is formed in a kind of covering cap and may be injection-molded or blown from plastic.

Fig. 4 shows still another form of realization where, instead of the cuffed plastic disk 11 and the separate metal bushing 10, from the free end of screw 2 against the metal washer 7 a plastic bushing 12 is applied, which for the transmission of axial loads also has the strap-protecting edge surface 12' in the sense of the plastic disk 11 of Fig. 3. In Fig. 4 there is formed further, on the end of bushing 12 opposite the plastic disk 12', a bead 13, by which the noose 4' of strap 1 placed around the bushing 12 is securely held. The form of realization shown in this Fig. 4 serves in particular for preassembly. After noose 4' has been formed, the manufacturer of the strap system presses the plastic bushing 12 in by hand or by machine in such a way that noose 4' is held from three sides, as shown in Fig. 4, namely from inside by the bushing 12, from above by the annular shoulder 12', and below by the bead 13.

Assuming a weight of 50 g per attachment fitting in conventional use, a saving of 100 g can be achieved by saving of two fitting parts. In vehicles with four safety belts, as normally sold by the motor vehicle manufacturers, this results in a weight saving of about 0.4 kg per vehicle.

**Claims**

1. A method of attaching an end of a strap (1) of a safety belt to a vehicle using a loop (4) formed by said end fastened (by 5) on itself at a distance from the loop (4) and a screw (2) having a head (3) thereon and screwable into a connection fitting (9), the method comprising the steps of folding the loop (4) of the strap (1) at least once around an imaginary line (6) extending in the longitudinal direction of said strap (1) forming a noose (4'), then inserting the screw (2) in the hole formed by this noose (4') after, optionally, a washer (7) has first been placed under the head (3) of the screw (2) and then screwing the screw (2) into the connection fitting (9).

2. Method according to claim 1, characterized in that the strap noose (4') is so short that even at maximum overhead load of the strap (1) it does not slip over the washer (7) and/or screw head (3).

3. Method according to claim 1, characterized in that the screw (2) comprises adjacent its head (3) a thread-free portion.

4. Method according to claim 1, characterized in that a bushing (10, 12) is provided adjacent to the head (3) of said screw (2) and which partially covers the threads (8) thereof.

5. Method according to claims 1 or 2, characterized in that a plastic disk (11) is disposed next to said washer (7) and partially embraces the washer (7).

6. Method according to claim 5, characterized in that the plastic disk (12') and the bushing (12) are made in one piece.

7. Method according to claim 5 or 6, characterized in that a bead (13) is molded on at the end of the bushing (12) opposite the plastic disk (12').

## Revendications

1. Procédé de fixation d'une extrémité d'une sangle (1) d'une ceinture de sécurité à un véhicule, utilisant une boucle (4) formée par cette extrémité attachée (par 5) à elle-même à une certaine distance de la boucle (4), et une vis (2) ayant une tête (3) et vissable dans une monture de liaison (9), ce procédé consistant à plier la boucle (4) de la sangle (1) au moins une fois autour d'une ligne imaginaire (6) s'étendant dans la direction longitudinale de la sangle (1) pour former un noeud (4'), à introduire la vis (2) dans le trou formé par ce noeud (4') après avoir éventuellement placé une rondelle (7) sous la tte (3) de la vis (2), puis à visser la vis (2) dans la monture de liaison (9).

2. Procédé la revendication 1, caractérisé en ce que le noeud de sangle (4') est suffisamment court pour que même avec la charge vers le haut maximale de la sangle (1), il ne glisse pas pardessus la rondelle (7) et/ou la tête (3) de la vis.

3. Procédé selon la revendication 1, caractérisé en ce que la vis (2) présente près de sa tête (3) une partie non filetée.

4. Procédé selon la revendication 1, caractérisé en ce que près la tête (3) de la vis (2) est prévue une bague (10, 12) qui couvre en partie le filetage (8), de la vis.

5. Procédé selon l'une des revendications 1 ou 2, caractérisé en ce qu'un disque en plastique (11) est placé contre la rondelle (7) et embrasse en partie ladite rondelle (7).

6. Procédé selon la revendication 5, caractérisé en ce que le disque en plastique (12') et la bague (12) sont réalisés d'une seule pièce.

7. Procédé selon l'une des revendications 5 ou 6, caractérisé en ce qu'un rebord (13) est réalisé par moulage à l'extrémité de la bague (12) opposée au disque en plastique (12').

## Patentansprüche

1. Verfahren zum Befestigen des Endes eines Bandes (1) eines Sicherheitsgurtes an einem Fahrzeug unter Verwendung einer Schleife (4), welche durch dieses Ende gebildet ist, das (durch 5) auf sich selbst im Abstand von der Schlaufe (4) befestigt ist, und einer Schraube (2) mit einem Kopf (3) auf derselben, welche in einem anschlußbeschlag (9) einschraubbar ist, wobei das Verfahren folgende Schritte aufweist:

Umfalten der Schlaufe (4) des Bandes (1) mindestens einmal um eine in Längsrichtung des Bandes gelegte, gedachte Linie (6) unter bildung einer Schleife (4'), Einführen der Schraube (2) in dem durch diese Schleife (4) gebildeten Loch, nachdem, vorzugsweise, eine Unterlagscheibe (7) unter dem Kopf (3) der Schraube (2) zuerst angebracht worden ist, und dann Einschrauben der Schraube (2) in den Anschlußbeschlag (9).

2. Verfahren nach Anspruch 1, dadurch gekennziechnet, daß die Gurtschleife (4') derart kurz ist, daß sie auch bei maximaler Überkopfbelastung des Bandes (1) nicht über die Unterlegscheibe (7) und/oder den Schraubenkopf (3) rutscht.

3. Verfahren nach Anspruch 1, dadurch gekennzeichnet, daß die Schraube (2) neben ihrem Kopf (3) ein gewindefreies Teil aufweist.

4. Verfahren nach Anspruch 1, dadurch gekennzeichnet, daß am Kopf (3) der Schraube (2) eine Buchse (10, 12) vorgesehen ist, die teilweise das Gewinde (8) derselben überdeckt.

5. Verfahren nach Anspruch 1 oder 2, dadurch gekennzeichnet, daß eine Kunststoffscheibe (11) neben der Unterlegscheibe (7) angeordnet ist und diese teilweise umgreift.

6. Verfahren nach Anspruch 5, dadurch gekennzeichnet, daß die Kunststoffscheibe (12') und die Buchse (12) aus einem Stück geformt sind.

7. Verfahren nach Anspruch 5 oder 6, dadurch gekennzeichnet, daß ein Wulst (13) an einem Ende der Buchse (12) gegenüber der Kunststoffscheibe (12') angeformt ist.

# Fig. 1

# Fig. 2

1

# Fig. 3

# Fig. 4